# EUROPÄISCHE PATENTANMELDUNG

(11) **EP 1 943 903 A2**
(43) Veröffentlichungstag der Anmeldung: **16.07.2008**
(21) Anmeldenummer: 08002366.6
(22) Anmeldetag: 10.02.2003
(51) Int. Cl.: A21B 3/04, A47J 27/04

(54) **Dampfgarer sowie Anordnung und Verfahren zum Dampfgaren**

(30) Priorität: 18.02.2002 DE 10206690
(62) Teilanmeldung aus: 03704584.6
(71) Anmelder: BSH Bosch und Siemens Hausgeräte GmbH, 81739 München (DE)
(72) Erfinder: Erdmann, Klaus, New Bern NC 28562 (US); Götz, Bernhard, 75059 Zaisenhausen (DE); Herbolsheimer, Jochen, 83308 Trotsberg (DE); Ranzenberger, Barbara, 75015 Bretten (US)
(74) Vertreter: Grünecker, Kinkeldey, Stockmair & Schwanhäusser Anwaltssozietät

(57) **Zusammenfassung**

Die Erfindung betrifft einen Dampfgarer, der ein wärmeleitendes Wannenteil (10) zur Aufnahme eines Flüssigkeitsvorrats und einen auf dem Wannenteil (10) angeordneten Dampfeinsatz (30) zur Aufnahme für Gargut aufweist. Erfindungsgemäß ist vorgesehen, das Wannenteil (10) des Garbehältnisses über eine Halteeinrichtung (18) vom Boden des Backofens (5) beabstandet anzuordnen.

## Beschreibung

Das Verfahren betrifft einen Dampfgarer sowie ein Verfahren und eine Anordnung zum Dampfgaren. Aus der EP 0 556 166 B1 ist ein gattungsgemäßer Dampfgarer zum Garen von Gargut in einem speziell eingerichteten Dampfofen bekannt. Dieser Dampfofen weist eine Ofenmuffel auf, auf deren Boden eine Heizvorrichtung vorgesehen ist und die zusätzlich einen Wassertank besitzt. Zum Dampfgaren wird ein als geschlossenes Garbehältnis ausgebildeter Dampfgarer, in dem das Gargut auf einem Dampfeinsatz angeordnet ist, mit seinem Unterteil, das als Wasservorratsbehälter dient, auf die Heizeinrichtung der Ofenmuffel aufgesetzt, wobei das Unterteil an den Wassertank angeschlossen wird. Durch Aufheizen des Unterteils des Garbehältnisses mit Hilfe der Heizeinrichtung wird Dampf erzeugt, der infolge seines Auftriebs nach oben steigt und dabei das Dampfgut auf dem Dampfeinsatz umströmt, uni dieses zu garen. Der Dampf kondensiert dann teilweise an der kälteren Oberfläche des Gargutes bzw. an der Oberseite des Garbehältnisses, wobei das Kondensat in das Unterteil zurücktropft. Da das Garbehältnis nicht vollständig dicht ist, entweicht aber ein großer Teil des Dampfes in die Ofenmuffel. Ein Nachteil dieser Auslegung des Dampfgarers ist, dass für den Dampfvorgang ein speziell eingerichteter Dampfofen mit einer freiliegenden Heizeinrichtung benötigt wird, auf das das Garbehältnis zum Dampfgaren direkt aufgesetzt wird. Weiterhin ist die Handhabung aufwändig, da das Garbehältnis manuell an den Wassertank im Dampfofen angeschlossen werden muss, um eine ausreichende Bevorratung mit Wasser für den Garvorgang zu gewährleisten.

Aus der EP 165 187 A1 ist ein weiterer Dampfgarer mit einem geschlossenen Garbehältnis zur Aufnahme von Gargut bekannt, bei dem das Garbehältnis in eine durch eine Zugangstür verschließbare heizbare Ofenmuffel eingeschoben und das Garbehältnis zugleich an eine außerhalb dieser Ofenmuffel angeordnete Dampferzeugungseinrichtung angeschlossen wird. Die Ofenmuffel mit dem Garbehältnis wird in einer Aufheizphase auf eine Temperatur von wenigstens 100° C aufgeheizt, wodurch ein Kondensieren des anschließend von der Dampferzeugungseinrichtung zum Dampfgaren eingeblasenen Dampfes verhindert wird. Auch bei dieser Auslegung des Dampfgarers ist wiederum ein spezieller Dampfofen mit einer externen Dampferzeugungseinrichtung notwendig, um den Dampferzeugungsvorgang auszuführen.

In der GM 77 03 401 ist außerdem ein Dampfgarer mit einem aus einem Untertopf und einem Deckel gebildeten Garbehältnis beschrieben, in der ein Dampfeinsatz zur Aufnahme des Garguts angeordnet ist, wobei zum Dampfgaren extern erzeugter Dampf in mindestens eine Eintrittsöffnung in den Deckel eingeblasen und aus mindestens einer Kondensatöffnung im Behälterboden abgezogen wird, so dass der Dampf das Gargut von oben nach unten zwangsweise durchströmt.

Aus der DE 37 14 323 A1 ist weiterhin ein Dampfgarer für Mikrowellenherde bekannt, der aus einem einen Wasservorrat enthaltenden Behältnis, in dem ein mit Dampfdurchlässen versehener mikrowellenundurchlässiger Dampfeinsatz eingesetzt ist, und aus einem ebenfalls mikrowellenundurchlässigen Deckel besteht. Beim Dampfgaren wird das Wasser im Behälter des Dampfgarers mit Hilfe der Mikrowellen im Mikrowellenofen erhitzt, durchströmt das Gargut auf dem Dampfeinsatz und wird anschließend über einen Druckauslassdeckel in den Mikrowellenofen abgeführt.

Aufgabe der Erfindung ist es, einen Dampfgarer sowie eine Anordnung und eine Vorrichtung zum Dampfgaren bereit zu stellen, die einen einfach zu handhabenden Dampfgarvorgang in einem herkömmlichen Backofen ermöglichen.

Diese Aufgabe wird mit einem Dampfgarer nach Anspruch 1, einer Anordnung nach Anspruch 12 und einem Verfahren nach Anspruch 15 gelöst. Bevorzugte Weiterbildungen sind in den abhängigen Ansprüchen angegeben.

Der erfindungsgemäße Dampfgarer zum Dampfgaren von Gargut in einem herkömmlichen Backofen mit einer Heizeinrichtung im Bodenbereich zeichnet sich durch ein wärmeleitendes Wannenteil zur Aufnahme eines Flüssigkeitsvorrats aus, auf dem ein Dampfeinsatz zur Aufnahme von Gargut angeordnet ist, das von dem aus dem Flüssigkeitsvorrat im Wannenteil erzeugten Dampf umströmt wird, um dampfgegart zu werden. Das Wannenteil des Dampfgarers ist dabei mit einer Halte- oder Beabstandungseinrichtung versehen, um das Wannenteil vom Boden des Backofens und damit der Heizeinrichtung beabstandet anzuordnen. Durch diese Auslegung ist es möglich, den Dampfgarvorgang in einem herkömmlichen Backofen mit einer Standard-Heizeinrichtung unter dem Backofenboden auszuführen, da durch die vom Backofenboden beabstandete Anordnung gewährleistet wird, dass am Boden des Backofens kein Hitzestau auftritt, der sich ergeben würde, wenn der Dampfgarer direkt aufgesetzt wird, was dann zu einem Beschädigen des Backofens führen könnte. Besonders vorteilhaft kann es sein, wenn der Dampfgarer keine Füße aufweist, sondern in an den Seitenwänden vorgesehenen Halteeinrichtungen gehaltert ist, wobei das Wannenteil so ausgelegt ist, dass der Backofen dabei im Wesentlichen in zwei voneinander getrennte Raumbereiche unterteilt wird.

Die Auslegung des Wannenteils zur Unterteilung des Garraumes des Backofens in zwei im wesentlichen voneinander getrennte übereinander angeordnete Raumbereiche, sorgt weiterhin dafür, dass sich beim Dampfgarvorgang, der durch die Heizeinrichtung im Backofenboden bewirkt wird, ein Temperaturgefälle in der Ofenmuffel zwischen dem oberen Bereich und dem unteren Bereich ergibt, so dass der im Wannenteil erzeugte Dampf, der das Gargut umströmt, im oberen Bereich kondensiert, um dann in den Flüssigkeitsvorrat im Wannenteil zurückgeführt zu werden. Hierdurch wird gewährleistet, dass im Backofen kein zusätzlicher Wassertank bzw. keine Dampfeinblasung erfolgen muss, da durch den Kreislaufprozess der im Wannenteil enthaltene Flüssigkeitsvorrat ausreicht, den Garvorgang abzuschließen. Die beiden Raumbereiche müssen dabei offensichtlich nicht gegeneinander hermetisch abgedichtet sein.

Das Gesagte gilt analog für die erfindungsgemäße Anordnung zum Dampfgaren mit einem Dampfgarer in der oben beschriebenen Art und einem Backofen mit einer getrennt schaltbaren Unterhitze-Heizeinrichtung, die sich für den Einsatz des erfindungsgemäßen Garvorgangs eignet.

Gemäß einer bevorzugten Ausführungsform ist, um eine bessere Wärmeübertragung des Dampfgarers zu erreichen, die dem Backofenboden zugewandte Seite des Wannenteils zur Vergrößerung einer wärmeaufnehmenden Fläche strukturiert und / oder dunkel ausgeführt.

Gemäß einer weiteren bevorzugten Ausführungsform ist zur vereinfachten Abteilung der beiden Raumbereiche im Backofen die Halteeinrichtung als zwei an gegenüberliegenden Seiten des Wannenteils angeordnete Führungsschienen ausgestaltet, die auf entsprechende in den Backofen-Seitenwandungen ausgebildete bzw. dort angeordnete Trageelemente aufgeschoben werden können. Bevorzugt ist dabei weiterhin, dass als Führungsschienen ein nach außen abgewinkelter Rand des Wannenteils dient, wodurch eine einfach gestaltete Halteeinrichtung für den Dampfgarer erreicht wird. Gleichzeitig lässt sich hierdurch das Wannenteil alternativ zum Dampfgarvorgang auch für einen Bratvor gang einsetzen, bei dem das Lebensmittel dann direkt im Wannenteil ohne Flüssigkeitsvorrat angeordnet ist.

Gemäß einer weiteren bevorzugten Ausführungsform ist das Garbehältnis des Dampfgarers zweiteilig ausgelegt mit einem zusätzlichen wärmeisoüerenden Deckel, der ein geneigtes Deckeldach besitzt. Durch diese Auslegung wird gewährleistet, dass der aus dem Flüssigkeitsvorrat im Wannenteil erzeugte Dampf am wärmeisolierenden und damit kälteren Deckel weitgehend kondensiert, wobei die Deckelneigung dafür sorgt, dass das Kondensat entlang der Garbehältniswandung schnell und zuverlässig in den Flüssigkeitsvorrat zurück geführt wird.

Gemäß einer weiteren bevorzugten Ausführungsform ist im Randbereich des Wannenteils umlaufend eine Absenkung vorgesehen, in der der Deckel sicher gehalten wird.

Der Deckel kann zumindest eine Dampfaustrittsöffnung aufweisen, um den Dampfgarvorgang im Dampfgarer drucklos zu gestalten, so dass auf eine komplizierte Überdruckeinrichtung im Garbehältnis verzichtet werden kann. Daher reicht das Einfüllen einer Mindestmenge von Wasser in die Wanne von z.B. 500 - 750 ml, um den Dampfgarvorgang sicher durchführen zu können. Am Ende des Dampfgarvorgangs nicht verbrauchtes Wasser bleibt in der Wanne übrig und kann einfach entsorgt werden.

Zum Dampfaustritt dienen dabei vorzugsweise Öffnungen im Deckel und / oder im Wannenteil. Der Deckel ist dabei vorzugsweise mit einem haubenförmigen Deckeldach versehen, das auf vier Glasplatten angeordnet ist, die als Seitenwände dienen, wobei die Glasplatten an den Ecken mit Leisten verbunden sind, die gegenüber der Höhe der Glasplatten verkürzt sind, so dass Öffnungen entstehen, durch die Dampf zwischen Wannenteil und Deckel austreten kann.

Erfindungsgemäß ist die Anordnung zum Dampfgaren so ausgelegt, dass der Backofen eine getrennt schaltbare Unterhitze-Heizeinrichtung im Bodenbereich aufweist. Durch die Verwendung lediglich der Unterhitze beim Dampfgaren ist ein optimaler Garprozess gewährleistet. Weiter kann eine Backofensteuerung vorgesehen sein, mit einer Einstellmöglichkeit "Dampfgaren", bei der sich durch entsprechende Steuerung der Unterhitze-Heizeinrichtung eine Solltemperatur für den Backofen von 130° bis 170° C, vorzugsweise 150° C einstellen lässt. Mit dieser Auslegung wird gewährleistet, dass im vom Boden des Backofen beabstandeten Wannenteil zuverlässig eine Temperatur von über 100° C erreicht wird, um den Verdampfungsprozess sicher zu stellen. Bevorzugt ist hierbei, den Backofen ohne Dampfgarer mit einer Vorheizphase von vorzugsweise 10 bis 15 min. im Bereich der oben genannten Solltemperatur zu betreiben, um ein Temperaturgefälle im Backofen herzustellen, bei dem sich im Bodenbereich des Backofens im Wesentlichen die Solltemperatur einstellt, so dass beim Einschieben des Dampfgarers die Dampferzeugung und damit der Garvorgang schlagartig einsetzt.

Die Erfindung wird anhand der beigefügten Zeichnungen näher erläutert. Es zeigen:
Fig. 1 a-c eine Ausführungsform eines erfindungsgemäßen Dampfgarers, wobei Fig. 1 a eine Explosionsdarstellung des Dampfgarers, Fig. 1 b einen Querschnitt durch ein Wannenteil und Fig. 1 c einen Querschnitt durch eine auf ein Seitenteil eines Deckels aufgesteckte Dichtleiste darstellen, und
Fig. 2 eine erfindungsgemäße Ausführungsform einer Dampfgaranordnung, wobei Fig. 2 a einen Backofen in Frontansicht mit eingeschobenem Dampfgarer und Fig. 2 b den Backofen mit dem Dampfgarer in Seitenansicht darstellt.

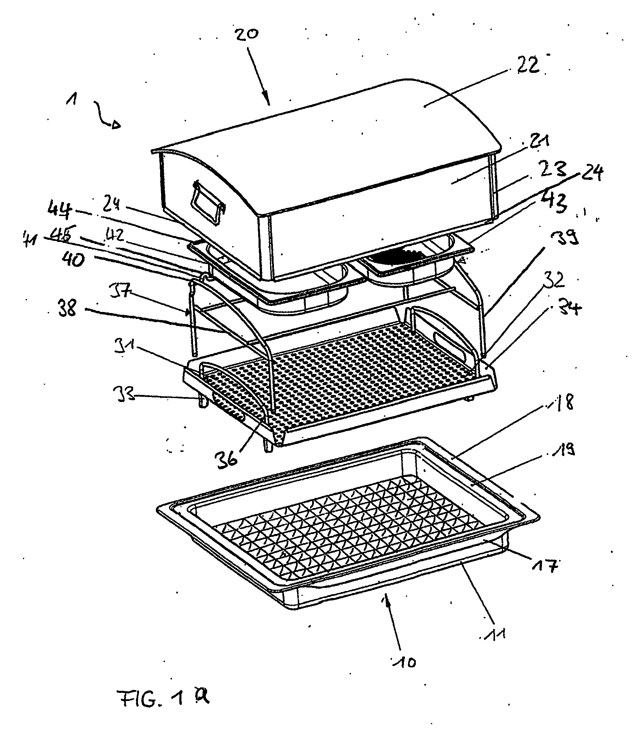

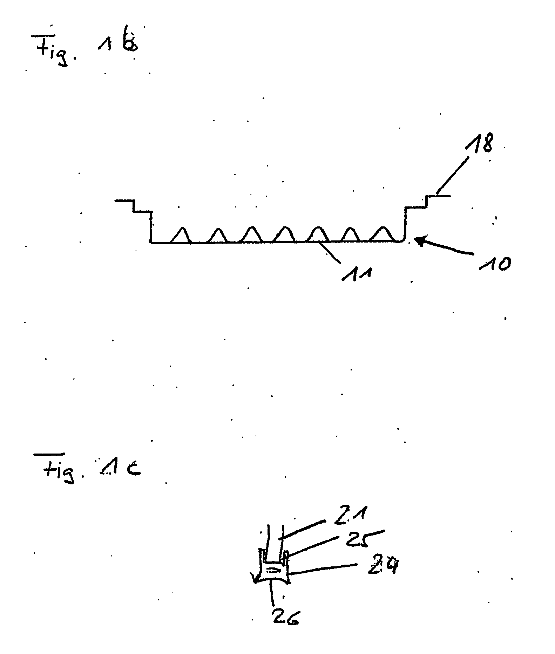

Der in Figur 1 dargestellte Dampfgarer weist ein Garbehältnis 1 mit einem Wannenteil 10 und einem Deckel 20 auf. Das Wannenteil 10 dient zur Aufnahme eines Flüssigkeitsvorrats, insbesondere von Wasser, und weist, wie der Querschnitt in Fig. 1 b'zeigt, einen Boden 11 auf, der vorzugsweise waffelförmig ausgestaltet ist. Durch diese waffelförmige Ausgestaltung wird eine vergrößerte Boden- und damit wärmeaufnehmende Fläche erreicht, wodurch eine verbesserte Wärmeabsorption des Wannenteils gewährleistet wird. Alternativ zu einer Waffelstruktur besteht auch die Möglichkeit, eine anders geartete Wölbungsstruktur im Boden des Wannenteils 10 vorzusehen, um eine solche vergrößerte wärmeaufnehmende Oberfläche zu erreichen. Weiterhin ist der Boden 11 des Wannenteils 10 vorzugsweise aus einem hochwärmeleitenden Material hergestellt, wodurch die Wärmeaufnahme weiter verbessert wird. Der Boden 11 des Wannenteils 10 ist dabei vorzugsweise dunkel ausgeführt und wirkt so als schwarzer Strahler, wodurch die Wärmeabsorption gesteigert wird.

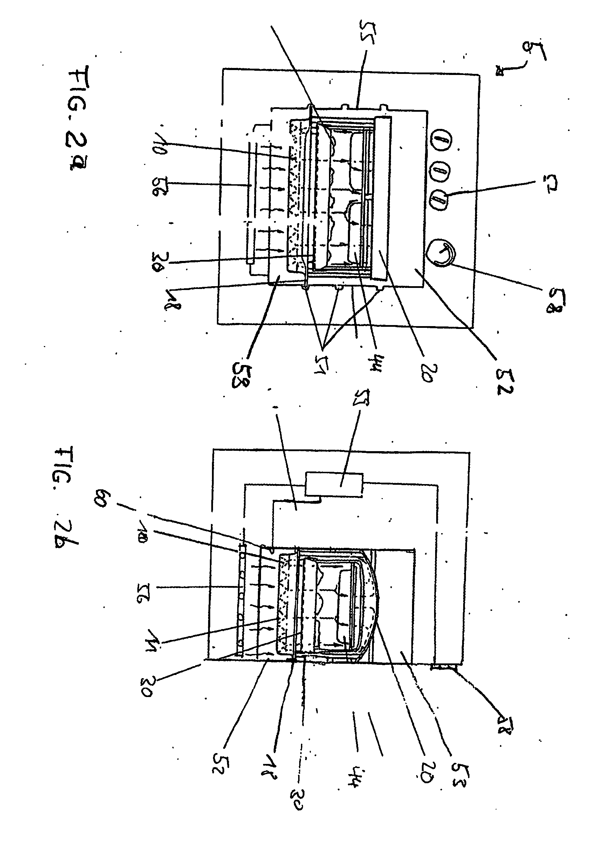

Ein umlaufender Rand 18 des Wannenteils 11 ist allseitig senkrecht nach außen abgewinkelt, wobei der Rand 18 zweistufig ausgelegt ist, so dass in einer dem Hohlraum im Wannenteil zugewandten Seite allseitig eine Absenkung 19 ausgebildet ist, die als Auflage und Dichtfläche für den Deckel 20 dient. Der Rand 18 ist dabei an den beiden Schmalseiten des im Wesentlichen rechteckigen Wannenteils 11 vorzugsweise verbreitert ausgeführt, um als Halteelemente zu dienen, die sich auf entsprechende Trageelemente in einem Backofen aufsetzen bzw. aufschieben lassen. Diese Trageelemente können, wie in der Ausführungsform in Figur 2 gezeigt, Einschubrillen 51 an einer Backofenwandung 55 sein, in die sich das Wannenteil 10 mit seinem verbreiterten Rand 18 einschieben lässt. Statt solcher Einschubrillen 51 können jedoch zum Tragen des Wannenteils 10 in seinem verbreiterten Randbereich 18 auch Tragegestelle, z.B. Teleskopauszüge im Backofen 5 verwendet werden. Alternativ zur Ausbildung eines verbreiterten Randes als Halteelemente für das Wannenteil 10 und damit das Garbehältnis 1 des Dampfgarers können auch Abstandshalter, z.B. in Form von vier am Boden 11 des Wannenteils 10 angeordnete Füße vorgesehen sein.

An den Langseiten des Rands 18 ist, wie Fig. 1 a zeigt, weiterhin eine vorzugsweise senkrecht nach unten anstehende Abkantung 17 vorgesehen, die als Handgriff dient, um das Garbehältnis am Wannenteil auf einfache Weise aus dem Backofen ziehen zu können. Die Gesamtfläche des Wannenteils 10 des Garbehältnisses 1 entspricht vorzugsweise der Bodenfläche des Backofens 5, so dass bei eingeschobenem Garbehältnis 1 das Wannenteil 10 den Backofen 5 in zwei im Wesentlichen voneinander getrennte Raumbereiche 52, 53 unterteilt, wie in Fig. 2 gezeigt ist.

Im Wannenteil 10 des Garbehältnisses 1 kann ein durch Füße 33 beabstandeter Dampfeinsatz 30 vorgesehen sein. Dieser Dampfeinsatz 30 ist vorzugsweise aus Kunststoff oder Edelstahl gefertigt und hat ein waagrechtes Auflageblech 31, das mit einer matrixförmig ausgeführten Anordnung von Durchtrittslöchern 32 versehen ist, durch die Dampf durchtreten kann. Auf diesem Auflageblech 31 kann das Gargut angeordnet werden. Die große durchgehende Fläche des Auflagebleches 31 ermöglicht es, hier auch große Lebensmittel zu garen. Das Auflageblech 32 ist an seinen Rändern 34 hochgezogen, um zu gewährleisten, dass das Gargut beim Herausnehmen bzw. Einführen des Dampfeinsatzes 30 in das Wannenteil 10 nicht vom Auflageblech 32 rutschen kann. Um zu gewährleisten, dass der am Dampfeinsatz 30 bzw. am Gargut kondensierende Dampf in den Flüssigkeitsvorrat im Wannenteil 30 zurückfließen kann, ist der Rand 34 seitlich durchbrochen. Zur einfachen Handhabung des Dampfeinsatzes 30, insbesondere zum Einsetzen und Herausnehmen aus dem Wannenteil 10, sind an den Schmalseiten weiterhin Bügelgriffe 36 vorgesehen. Die Höhe der Füße 33 am Auflageblech 31 ist so abgestimmt, dass sich zwischen dem Auflageblech 31 und dem Boden 11 des Wannenteils 10 ein Hohlraum ergibt, der die Aufnahme von wenigstens einem Liter Flüssigkeit erlaubt, was zum Dampfgaren auch von schwerem und voluminösem Gargut ausreicht.

Auf dem Dampfeinsatz 30 kann mit Hilfe eines Tragegestells 37 eine zweite Garebene hergestellt werden. Das Tragegestell 37 weist dabei vorzugsweise einen aus vier Rohren gebildeten waagrechten Rahmen 38 auf, der von vier senkrechten am Rahmen angeordneten Rohren 39 getragen wird. Diese Rohrfüße 39 lassen sich vorzugsweise in die Dampfdurchtrittslöcher 32 im Auflageblech 31 des Dampfeinsatzes 30 einsetzen. An den Schmalseiten des Rahmens 38 sind jeweils seitlich Bügelgriffe 40 vorgesehen, mit denen sich das Tragegestell 37 einfach handhaben lässt. Die Bügelgriffe 40 sind weiterhin vorzugsweise über eine über dem Rahmen angeordnete Querstrebe 41 verbunden, auf die sich ein nach außen abgewinkelter Rand 42 eines Garbehälters 43, der mit seinem Boden vom Rahmen 38 des Gestells 37 getragen wird, aufsetzen lässt. Bei der gezeigten Ausführungsform lassen sich auf dem Gestell 37 nebeneinander zwei Garbehälter 43 anordnen, wobei ein sicherer Halt dieser Garbehälter durch zwei Höcker 45 gewährleistet wird, in die eine am Garbehälter 41 angeordnete Aussparung 44 eingreifen kann.

Der Deckel 20 des Garbehältnisses 1 setzt sich aus vier jeweils aus einer Glasplatte bestehenden Seitenwänden 21 zusammen, auf denen einen nach zwei Seiten abfallendes haubenförmiges Deckeldach 42 angeordnet ist. Die aus Glas bestehenden oder alternativ aus Pressglas oder PSU-ähnlichem Kunststoff gefertigten Seitenwände 21 des Deckels sind durch Leisten 23 miteinander verbunden. Diese vorzugsweise aus Metall gefertigten Leisten 23 sind dabei etwas kürzer als die Seitenwände 21 ausgestaltet, so dass sich bei

in die Absenkung 19 am Wannenteil 10 eingesetzten Deckel 20 Öffnungen ergeben, durch die Dampf aus dem Garbehältnis 1 entweichen kann. Diese Öffnungen dienen dazu, das Garbehältnis während des Garvorgangs drucklos zu halten, wodurch auf eine aufwändige Überdruckventileinrichtung verzichtet werden kann. Die Dampföffnungen können jedoch auch an jeder beliebigen anderen Stelle des Deckels 20 bzw. im oberen Bereich des Wannenteils 10 angeordnet sein.

Am unteren Rand der Seitenwände 21 ist weiterhin jeweils eine Dichtleiste 24 aufgesetzt, die die Eckleisten 23 freilässt. Ein Querschnitt durch diese auf die Seitenwände 21 des Deckels 20 aufgesetzten Dichtleisten 24 ist in Fig. 1 c gezeigt. Die Dichtleiste 24 ist dabei so ausgebildet, dass sie eine U-förmige Aufnehmung 25 mit im Wesentlichen der Breite der Seitenwand zum Aufstecken auf diese Seitenwand 21 und eine untere, vorzugsweise leicht konkav geformte plane Dichtfläche 26, die bei aufgesetztem Deckel 20 auf der Absenkung 19 am Wannenteil 10 aufsitzt und durch das Eigengewicht des Deckels 20 für eine zuverlässige Abdichtung sorgt, so dass im Eckleistenbereich Dampfaustrittsöffnungen verbleiben. Alternativ besteht auch die Möglichkeit, den Deckel als Formteil z.B. aus einem durchsichtigen Kunststoff zu fertigen, wobei die Entlüftungsausnehmungen dann an beliebiger Stelle integriert sein können.

Außer den Seitenwänden 21 kann auch das haubenförmige Deckeldach 22 aus Glas gefertigt sein, wodurch sich eine gute Sicht auf das Gargut während des Dampfvorgangs ergibt. Alternativ besteht jedoch auch die Möglichkeit, den Deckel 20 aus einem anderen Material, das vorzugsweise jedoch ähnlich wärmeisolierend wie Glas sein soll, zu fertigen, wobei dann ein Guckloch zur Sicht auf das Gargut in der Seitenwand bzw. im Deckel vor gesehen ist, das vorzugsweise die Form eines Auges hat, um einen vergrößerten Sichtwinkel herzustellen. Alternativ zu einem sich nach zwei Seiten neigenden haubenförmigen Deckel besteht auch die Möglichkeit, den Deckel in Form eines Pultdachs auszugestalten bzw. mit jeder beliebigen anderen Dachform, bei der das Deckeldach geneigt ist, um den kondensierenden Dampf zu den Seitenwänden abzuleiten.

Der Garvorgang, mit dem in Fig. 1 dargestellten Dampfgarer wird im Folgenden anhand von Fig. 2 erläutert. Zum Dampfgaren wird das Wannenteil 10 des Garbehältnisses 1 mit einem Flüssigkeitsvorrat befüllt, wobei die Flüssigkeitsmenge zwischen 500 und 1000 ml beträgt. Zur verbesserten Handhabung kann hierfür eine Strichmarkierung am Wannenteil 10 vorgesehen sein, die die Höhe der eingefüllten Flüssigkeitsmenge angibt. Dann wird der mit dem Gargut versehene Dampfeinsatz 30 in das Wannenteil 10 des Garbehältnisses 1 eingesetzt und ggf eine zweite Gargutebene durch das Gestell 37 mit den Garbehältem 43, die ebenfalls Gargut enthalten können, ausgebildet. Anschließend wird dann der Deckel 20 auf das Wannenteil 10 aufgesetzt, um das Garbehältnis 1 zu verschließen. Gleichzeitig wird der Backofen 5 vorgeheizt. Der Backofen kann dabei ein herkömmlicher Backofen sein mit einer unter dem Boden angeordneten, getrennt schaltbaren Unterhitze-Heizeinrichtung 56.

Diese Unterhitze-Heizeinrichtung 56 wird dann auf eine Solltemperatur zwischen 130° C und 170° C vorzugsweise auf 150° C eingestellt und 10 bis 15 min. vorgeheizt, so dass sich im Backraum ein Temperaturgefälle ergibt, wobei im Bereich der untersten Einschubebene, in der das Wannenteil 10 mit seinem verbreiterten Rand 18 eingeschoben wird, eine Temperatur von ca. 150° C ergibt. Nach dieser Vorheizphase wird dann der Dampfgarer in die Backofenmuffel eingeschoben, wobei das Wannenteil 10 in die unterste Einschubebene eingesetzt wird und den Backofen in zwei im Wesentlichen voneinander getrennte Raumbereiche, den Raumbereich 52 mit dem Boden des Wannenteils 10 und den Raumbereich 53 mit dem Deckel 20 aufteilt. Durch die Vorheizphase wird erreicht, dass der wärmeleitende Boden 11 des Wannenteils 10 mit dem Flüssigkeitsvorrat im Wesentlichen sofort auf 100° C aufgeheizt wird, wodurch sofort ein Verdampfen einsetzt. Dieser Dampf steigt dann selbsttätig auf und tritt durch die Dampfdurchtrittslöcher 32 des Dampfeinsatzes 30 hindurch, umströmt das auf diesem liegende Gargut und das in der darüber liegenden zweiten Garebene in den Garbehältern 44 angeordnete Gargut, um dieses dampfzugaren.

Auf den kühleren Oberflächen des Gargutes kondensiert der Dampf dann teilweise und tropft zurück in das Wannenteil 10, der übrige Dampf steigt bis zum Deckeldach 22 auf und kondensiert hier, wird dann im wesentlichen entlang der Seitenwände 21 des Deckels 20 in das Wannenteil 10 zurück geführt. Ein kleiner Teil des Dampfes entweicht weiterhin durch die Dampföffnungen im Deckel 20 in den oberen Raumteil 53 der Backofenmuffel, wobei dieser Dampfaustritt so angelegt ist, dass bei einem Garprozess mit einer Solltemperatur von 130° C bis 170° C, vorzugsweise 150° C ein Garvorgang bis 1,5 Stunden möglich ist, ohne dass der gesamte Flüssigkeitsvorrat aus dem Dampfgarer verdampft und in die Backofenmuffel entwichen ist.

In Fig. 2 a ist der Garvorgang mit in dem Backofen eingeschobenen Dampfgarer in Frontansicht und in Figur 2 b in einem seitlichen Querschnitt gezeigt. Bei der dargestellten Ausführung ist neben den herkömmlichen Stellknöpfen 57 für den Backofen ein zusätzlicher Stellknopf 58 für eine Dampfgareinstellung vorgesehen. Mit dieser Dampfgareinstellung kann vorzugsweise die Art des Garguts voreingestellt werden, so dass die Dampfgareinstellung dann automatisch die Länge des Garvorgangs an dieses Gargut anpasst. Alternativ kann jedoch auch vorgesehen sein, die Länge des Garvorgangs manuell durch eine Zeituhr einzustellen. Eine Dampfgarüberwachung 59 kann weiterhin so ausgelegt sein, dass sie nach Ende des Vorheizvorgangs ein akustisches oder optisches Signal gibt, um dem Bediener anzuzeigen, dass er nun den Dampfgarer in den Backofen einführen soll, um den Garvorgang einzuleiten.

Zur Überwachung der Solltemperatur ist die Dampfgarüberwachung 59 an einen Temperatursensor 60 in der Backofenmuffel, der vorzugsweise unterhalb der untersten Einschubebene angeordnet ist, angeschlossen, um die Temperatur zu messen und die Heizleistung der Unterhitze-Heizeinrichtung 56 entsprechend einzustellen. Das Ende der Dampfgarphase kann dann wiederum durch ein akustisches oder optisches Signal von der Dampfgarüberwachung 59 dem Benutzer angezeigt werden. Weiterhin kann die Dampfgarüberwachung so ausgelegt sein, dass dann automatisch die Unterhitze-Heizeinrichtung 56 abgeschaltet wird.

Das Garbehältnis kann weiterhin alternativ zu einem Dampfgarvorgang auch für einen Bratvorgang eingesetzt werden, bei dem das Wannenteil dann keinen Flüssigkeitsvorrat enthält. Das Lebensmittel kann dann direkt auf den Wannenboden aufgelegt werden oder auch auf den Dampfeinsatz, wobei der Bratvorgang mit oder ohne Deckel durchgeführt werden kann.

## Patentansprüche

1. Dampfgarer zum Dampfgaren von Gargut in einem Backofen (5), der eine Heizeinrichtung (56) in einem Bodenbereich aufweist, mit einem in den Backofen verbringbaren Garbehältnis (1), das ein wärmeleitendes Wannenteil (10) zur Aufnahme eines Flüssigkeitsvorrats und einen auf dem Wannenteil angeordneten Dampfeinsatz (30) zur Aufnahme für ein Gargut aufweist, um mithilfe der Heizeinrichtung (56) im Bodenbereich des Backofens aus dem Flüssigkeitsvorrat im Wannenteil (10) Dampf zu erzeugen, der das Gargut auf dem Dampfeinsatz (30) umströmt, **dadurch gekennzeichnet, dass** das Wannenteil (10) des Garbehältnisses eine Halteeinrichtung (18) aufweist, um das Wannenteil von dem Boden des Backofens (5) beabstandet anzuordnen.

2. Dampfgarer nach Anspruch 1, **dadurch gekennzeichnet, dass** das Wannenteil (10) den Garraum des Backofens in zwei, im Wesentlichen voneinander getrennte Raumbereiche (52, 53) unterteilt.

3. Dampfgarer nach Anspruch 1 oder 2, **dadurch gekennzeichnet, dass** die dem Backofenboden zugewandte Seite (11) des Wannenteils (10) zur Vergrößerung seiner wärmeaufnehmenden Fläche strukturiert und/ oder dunkel ausgeführt.

4. Dampfgarer nach einem der vorhergehenden Ansprüche, **dadurch gekennzeichnet, dass** die Halteeinrichtung (18) des Wannenteils (10) zwei an gegenüberliegenden Seiten des Wannenteils angeordnete Führungsschienen zur Aufnahme in entsprechende an den Backofen-Seitenwandungen ausgebildete bzw. angeordnete Trageelemente (51) umfasst.

5. Dampfgarer nach Anspruch 4, **dadurch gekennzeichnet, dass** ein nach außen abgewinkelter Rand (18) des Wannenteils (10) als Führungsschienen dient.

6. Dampfgarer nach der vorhergehenden Ansprüche, **dadurch gekennzeichnet, dass** ein wärmeisolierende Deckel (20) vorgesehen ist, der auf dem Wannenteil aufsitzt und geneigtes Deckeldach (22) besitzt.

7. Dampfgarer nach Anspruch 6, **dadurch gekennzeichnet, dass** im Randbereich (18) des Wannenteils umlaufend eine Absenkung (19) zur Aufnahme des Deckels (20) ausgebildet ist.

8. Dampfgarer nach Anspruch 6 oder 7, **dadurch gekennzeichnet, dass** im Deckel (20) wenigstens eine Dampfaustrittsöffnung vorgesehen ist.

9. Dampfgarer nach Anspruch 8, **dadurch gekennzeichnet, dass** der Deckel (20) ein haubenförmiges Deckeldach (22) aus Glas aufweist, das aus vier Glasplatten angeordnet ist, die als Seitenwände (21) des Deckels dienen, wobei die Glasplatten an den Ecken über Leisten (23) miteinander verbunden sind, die gegenüber der Höhe der Glasplatten verkürzt sind, um Dampfaustrittsöffnungen zwischen dem Wannenteil (10) und dem Deckel (20) zu bilden.

10. Dampfgarer nach Anspruch 9, **dadurch gekennzeichnet, dass** am unteren Rand der Glasplatten (21) des Deckels (20) jeweils eine Dichtungsleiste (24) angeordnet ist, die eine U-förmige Aufnahme (25) zum Aufstecken auf den Glasrand und eine der U-förmigen Aufnahme gegenüberliegende Dichtfläche (26) zum Aufliegen auf dem Wannenteil (10) besitzt.

11. Dampfgarer nach einem der vorhergehenden Ansprüche, **dadurch gekennzeichnet, dass** der Dampfeinsatz (30) eine Lochplatte (31) mit Füssen (33) zum Abstellen auf dem Boden des Wannenteils (10) und Griffen (36) zur Handhabung aufweist.

12. Anordnung zum Dampfgaren mit einem Dampfgarer nach einem der vorhergehenden Ansprüche und einem Backofen (5), der eine getrennt schaltbare Unterhitze-Heizeinrichtung (56) in einem Bodenbereich aufweist.

13. Anordnung zum Dampfgaren nach Anspruch 12, **dadurch gekennzeichnet, dass** am Backofen (5) eine Backofensteuerung (59) mit der Einstellung Dampfgaren" vorgesehen ist, bei der eine Solltemperatur für den Backofen von 130° C bis 170°C, vorzugsweise 150° C eingestellt ist.

14. Anordnung zum Dampfgaren nach Anspruch 13, **dadurch gekennzeichnet, dass** die Einstellung "Dampfgaren" eine Vorheizphase ohne Dampfgarer mit einer Zeitdauer von vorzugsweise 10 min bis 15 min umfasst.

15. Anordnung zum Dampfgaren nach Anspruch 13 oder 14, **dadurch gekennzeichnet, dass** die Einstellung "Dampfgaren" eine Garphase mit Dampfgarer umfasst, deren Zeitdauer entsprechend dem Gargut einstellbar ist.

16. Verfahren zum Dampfgaren von Gargut in einem Backofen, der eine Heizeinrichtung in einem Bodenbereich aufweist, mit einem in den Backofen verbringbaren Garbehältnis, das ein wärmeleitendes Wannenteil zur Aufnahme eine Flüssigkeitsvorrats und einem auf dem Wannenteil angeordneten Dampfeinsatz zur Aufnahme für ein Gargut aufweist, um mithilfe der Heizeinrichtung im Bodenbereich des Backofens aus dem Flüssigkeitsvorrat im Wannenteil Dampf zu erzeugen, der das Gargut auf dem Dampfeinsatz umströmt, **dadurch gekennzeichnet, dass** das Wannenteil des Garbehältnisses von dem Boden des Backofens beabstandet angeordnet wird.

17. Verfahren nach Anspruch 16, **dadurch gekennzeichnet, dass** zum Dampfgaren der Garraum des Backofens in zwei, im Wesentlichen voneinander getrennte Raumbereiche unterteilt wird.

18. Verfahren nach Anspruch 16 oder 17, **dadurch gekennzeichnet, dass** der Garvorgang bei einer Solltemperatur für den Backofen (18) von 130° bis 170°, vorzugsweise 150°, durchgeführt wird.

19. Verfahren nach Anspruch 16, 17 oder 18, **dadurch gekennzeichnet, dass** vor dem Garvorgang eine Vorheizphase ohne in den Backofen eingesetzten Dampfgarer mit einer Zeitdauer von vorzugsweise 10 min bis 15 min durchgeführt wird.
